# EUROPÄISCHE PATENTSCHRIFT

(11) **EP 0 619 184 B1**
(45) Veröffentlichungstag und Bekanntmachung des Hinweises auf die Patenterteilung: **01.07.1998**
(21) Anmeldenummer: 94105262.3
(22) Anmeldetag: 05.04.1994
(51) Int. Cl.: B32B 31/00, B32B 15/08, B29C 59/02, B44C 3/08, B29K 23/00

(54) **Schmucketiketten und Verfahren zu ihrer Herstellung**
Decorative labels and their process of manufacture
Etiquettes décoratives et leurs procédé de fabrication

(30) Priorität: 05.04.1993 DE 4311200
(43) Veröffentlichungstag der Anmeldung: 12.10.1994
(73) Patentinhaber: ZWECKFORM Büro-Produkte GmbH, D-83626 Valley (DE)
(72) Erfinder: Beinert, Norbert, D-65719 Hofheim-Lorsbach (DE); Knote, Manfred, D-83646 Bad Tölz (DE); Philipp, Gottfried, Dr., D-83607 Holzkirchen (DE); von Tluck und Toschonowitz, Christian, D-83666 Schaftlach (DE)
(74) Vertreter: Kindler, Matthias, Dr. Dipl.-Chem.

(56) Entgegenhaltungen:
- EP-A- 0 338 510
- WO-A-82/03202
- DE-A- 2 833 982
- FR-A- 1 535 226
- FR-A- 2 580 543
- US-A- 3 584 572
- US-A- 4 581 088
- DATABASE WPI Week 7806, Derwent Publications Ltd., London, GB; AN 78-11347A & JP-A-52 155 689 (SHOWA TEA PACK KK) 24. Dezember 1977
- DATABASE WPI Week 8002, Derwent Publications Ltd., London, GB; AN 80-02903C & JP-A-54 152 088 (YAMANAKA K) 29. November 1979
- PATENT ABSTRACTS OF JAPAN vol. 16, no. 103 (M-1221) 13. März 1992 & JP-A-03 278 947 (TANAKA KIKINZOKU KOGYO KK) 10. Dezember 1991

## Beschreibung

Die Erfindung betrifft ein Verfahren zur Herstellung von Schmucketiketten sowie nach diesem Verfahren erhältliche Schmucketiketten selbst.

Ein übliches Verfahren zur Herstellung von Schmucketiketten besteht darin, daß man eine Prägefolie unter Anwendung von Druck und/oder Hitze auf ein Substrat prägt. Hierbei wird im allgemeinen zunächst eine wärmeübertragbare Prägefolie, die eine Trägerschicht, eine Trennschicht, ein oder mehrere Dekorschichten und eine Schmelzkleberschicht enthält, auf ein Substrat, das ein Trennpapier, eine Klebschicht und einen Kunststoffilm umfaßt, derart aufgebracht, daß die Schmelzkleberschicht der Prägefolie und der Kunststoffilm des Substrats gegenüber liegen.

In einem zweiten Schritt wird dann die obige Kombination aus Prägefolie und Substrat mit einem erhitzten Stempel, dessen Stempelfläche ein bestimmtes Motiv trägt und erhöhte Ränder gegenüber dem Inneren der Stempelfläche aufweist und auf die Trägerschicht der Prägefolie einwirkt, geprägt, sodaß im Bereich der Stempelfläche Prägefolie und Substrat miteinander über die Schmelzkleberschicht verbunden werden. Die Ränder der Stempelfläche wirken gleichzeitig wie eine Stanzlinie, wobei bei dem Prägevorgang im Bereich der Ränder die Trennschicht, Dekorschicht(en) und Schmelzkleberschicht der Prägefolie, sowie Kunststoffilm und Klebschicht des Substrats durchgeschmolzen und durchgestanzt werden.

Die Trägerschicht der Prägefolie wird anschließend entfernt, wobei auch die Teile der Prägefolie von dem Substrat abgezogen werden, die nicht mit diesem verbunden sind.

Schließlich werden die Teile des Kunststoffilms und der Klebschicht des Substrats entfernt, die außerhalb des Umfangs des Stempelmotivs (Stempelfläche) liegen.

Ein Verfahren der obigen Art ist z.B. in USP 4 581 088 beschrieben.

Der in dem Substrat verwendete Kunststoffilm besteht in der Regel aus koloriertem Polyvinylchlorid (PVC), wobei zwischen der Klebschicht des Substrats und dem PVC-Film noch eine Aluminiumfolie vorgesehen werden kann.

Ein Kunststoffilm aus Polyvinylchlorid ist jedoch aus Gründen des Umweltschutzes und aufgrund der gesundheitlichen Gefährdung durch in dem Polyvinylchlorid eventuell vorhandene Weichmacher oder Restmonomere an Vinylchlorid nicht mehr erwünscht, sodaß ein drängendes Bedürfnis besteht, den PVC-Film in den Schmucketiketten, die häufig insbesondere von Kindern gehandhabt werden, zu ersetzen. Hierbei besteht jedoch ein Problem dahingehend, daß bislang kein Kunststoffmaterial neben PVC bekannt geworden ist, das aufgrund seiner Hitzewiderstandsfähigkeit und seines Schmelzverhaltens für einen Heißprägevorgang der oben genannten Art geeignet wäre.

Die Aufgabe der vorliegenden Erfindung besteht darin, ein Verfahren zur Herstellung von Schmucketiketten zu schaffen, das die Verwendung eines Polyvinylchlorid-Films vermeidet. Eine weitere Aufgabe besteht darin, Schmucketiketten ohne PVC zur Verfügung zu stellen.

Die obigen Aufgaben werden gelöst durch ein Verfahren zur Herstellung von Schmucketiketten, umfaßend die Schritte:
a) Aufbringen einer wärmeübertragbaren Prägefolie, die eine Trägerschicht, eine Trennschicht, ein oder mehrere Dekorschichten und eine Schmelzkleberschicht enthält, auf ein Substrat, umfaßend ein Trennpapier, eine Klebschicht und einen Kunststoffilm, derart, daß die Schmelzkleberschicht der Prägefolie und der Kunststoffilm des Substrats gegenüberliegen;
b) Prägen der obigen Kombination aus Prägefolie und Substrat mit einem erhitzten Stempel, dessen Stempelfläche ein bestimmtes Motiv trägt und erhöhte Ränder gegenüber dem Inneren der Stempelfläche aufweist und auf die Trägerschicht der Prägefolie einwirkt, sodaß im Bereich der Stempelfläche Prägefolie und Substrat über die Schmelzkleberschicht miteinander verbunden werden, und Trennschicht, Dekorschicht(en) und Schmelzkleberschicht der Prägefolie, sowie Kunststoffilm und Klebschicht des Substrats im Bereich der erhöhten Ränder durchgeschmolzen und durchgestanzt werden;
c) Abziehen der Trägerschicht der Prägefolie und der Teile der Prägefolie von dem Substrat, die nicht mit diesem verbunden sind; und
d) Abziehen der Teile des Kunststoffilms und der Klebschicht des Substrats, die außerhalb des Umfangs des Stempelmotivs (Stempelfläche) liegen;
   dadurch gekennzeichnet, daß man in dem Substrat als Kunststoffilm Homo- bzw. Copolymere von Ethylen mit einem Kristallit-Schmelzpunkt (DIN 53765) von 110 bis 120°C, einer Schmelzwärme (DIN 53765) von 125 bis 180 J/g und einem Schmelzindex (DIN 53735) von 2,0 bis 3,5 g/10 min verwendet, in der Prägefolie eine Schmelzkleberschicht wählt, die im Bereich von 110 bis 230°C wärmeaktivierbar ist, und den Prägevorgang bei einer Temperatur von 110 bis 230°C, einem Druck von 1,0 bis 7,0 bar und einer Zeitdauer von 3 bis 0,3 s durchführt.

In einer speziellen Ausführungsform des erfindungsgemäßen Verfahrens wird als Kunststoffilm in dem Substrat ein geeignetes Polyethylen niedriger Dichte (LDPE) verwendet. Die Dicke des Films beträgt hierbei vorzugsweise 20 bis 200 µm.

Für die Klebschicht in dem Substrat können Lösungsmittelkleber, wässrige Kleberdispersionen oder Heißschmelzkleber verwendet werden, die vorzugsweise auf Poly(meth)acrylaten und/oder Kautschuken basieren. Der Kleber wird hierbei vorzugsweise in einer Menge von 5 bis 25 g/m², wobei 15 bis 20 g/m² insbesondere bevorzugt sind, aufgetragen. Die Auftragung kann vollflächig oder partiell durch Walzen oder über ein Druckverfahren (Flexodruck, Siebdruck) erfolgen.

Als Trennpapier des Substrats wird vorzugsweise Silikonpapier verwendet. Hierunter versteht man einerseits kalandriertes oder satiniertes Papier, das mit einer Silikonschicht versehen ist. Andererseits beinhaltet der Begriff "Silikonpapier" auch Kombinationen aus Papier, einem Strich oder einem Polyethylenfilm und einer Silikonschicht.

Das Silikonpapier weist hierbei güngstigenfalls ein Flächengewicht von 50 bis 300 g/m², eine Dicke von 50 bis 300 µm und Trennwerte (FINAT FTM3) von 0,05 bis 0,5 N/25 mm auf.

In einer speziellen Ausführungsform des erfindungsgemäßen Verfahrens wird der Kunststoffilm des Substrats ein- oder beidseitig mit einer Haftvermittlungsschicht (Primer) versehen. Die Dicke dieser Haftvermittlungsschicht beträgt hierbei vorzugsweise 2 bis 10 µm.

Gemäß einer anderen Ausführungsform kann die Oberfläche des Kunststoffilms des Substrats durch eine Corona- oder Plasmaentladung vorbehandelt werden.

In der Prägefolie wird als Trägerschicht aus Gründen der Hitzebeständigkeit vorteilhafterweise ein Polyesterfilm verwendet, der vorzugsweise eine Dicke von 4 bis 10 µm besitzt.

Als Trennschicht in der Prägefolie kann eine Wachsschicht verwendet werden, die bei Einwirkung von Wärme schmilzt und eine leichte Abtrennung der Trägerschicht der Prägefolie ermöglicht.

Die Dekorschichten in der Prägefolie umfassen nicht-pigmentierte, transparente Lackschichten, pigmentierte Lackschichten und/oder Metallschichten. Die einzelnen Lackschichten weisen hierbei vorzugsweise eine Dicke von 0,5 bis 5 µm auf, während die Metallschichten, die durch Aufdampfen oder durch Kathodenzerstäubung aufgebracht sind, vorzugsweise eine Dicke im Bereich von 50 nm besitzen. Die einzelnen Schichten können weiterhin mit einer zwei- oder dreidimensionalen Musterung versehen sein.

In einer besonderen Ausführungsform umfassen die Dekorschichten in der Prägefolie eine pigmentierte Lackschicht oder Metallschicht auf der der Schmelzkleberschicht gegenüberliegenden Seite und eine nicht-pigmentierte Lackschicht auf der der Trennschicht gegenüberliegenden Seite.

Hinsichtlich der Abfolge der einzelnen Verfahrensschritte bieten sich mehrere Varianten des oben beschriebenen Verfahrens an. So kann man z.B. im Schritt b) zunächst Prägefolie und Substrat über die Schmelzkleberschicht vollflächig bei einer Temperatur von 110 bis 200°C, einem Druck von 1,0 bis 5,5 bar und einer Zeitdauer von 1 bis 0,01 s z.B. mit Hilfe eines Stempels oder einer Druckwalze mit jeweils glatter Oberfläche verbinden, ehe man die Kombination aus Prägefolie und Substrat mit einem erhitzten Stempel prägt, dessen Stempelfläche ein bestimmtes Motiv trägt und erhöhte Ränder gegenüber dem Inneren der Stempelfläche aufweist und auf die Trägerschicht der Prägefolie einwirkt, sodaß im Bereich der Stempelfläche Trennschicht, Dekorschicht(en) und Schmelzkleberschicht der Prägefolie, sowie Kunststoffilm und Klebschicht des Substrats im Bereich der erhöhten Ränder durchgeschmolzen und durchgestanzt werden, wobei dann im Schritt c) die Trägerschicht der Prägefolie abgezogen wird und im Schritt d) die Teile der Prägefolie, des Kunststoffilms und der Klebschicht des Substrats, die außerhalb des Umfangs des Stempelmotivs (Stempelfläche) liegen, abgezogen werden.

Um ein Schmucketikett mit einer besonders guten räumlichen Wirkung zu erhalten, kann die oben beschriebene Verfahrensvariante modifiziert werden, indem man in dem Schritt b) nach dem vollflächigen, thermischen Verbinden von Prägefolie und Substrat die Trägerschicht der aufgebrachten Prägefolie abzieht, und eine zweite Prägefolie mit unterschiedlichem Dekor aus Trägerschicht, Trennschicht, ein oder mehreren Dekorschichten und einer im Bereich von 110 bis 230°C aktivierbaren Schmelzkleberschicht auf den auf dem Substrat verbliebenen Teil der ersten Prägefolie derart aufbringt, daß die Schmelzkleberschicht der zweiten Prägefolie der bzw. den Dekorschicht(en) der ersten Prägefolie gegenüberliegt, die zweite Prägefolie auf die Dekorschicht(en) der ersten Prägefolie mit einem Stempel, dessen Stempelfläche flächenaussparende, außenliegende Konturmuster mit erhöhten Rändern aufweist, bei einer Temperatur von 110 bis 230°C, einem Druck von 1,0 bis 7,0 bar und einer Zeitdauer von 3 bis 0,3 s prägt, sodaß im näheren Bereich der Konturmuster der Stempelfläche erste und zweite Prägefolie über die Schmelzkleberschicht miteinander verbunden werden, und im Bereich der erhöhten Ränder die Trennschichten, Dekorschichten und Schmelzkleberschichten der Prägefolien, sowie Kunststoffilm und Klebschicht des Substrats durchgeschmolzen und durchgestanzt werden. Anschließend werden im Schritt c) die Trägerschicht der zweiten Prägefolie und die Teile der zweiten Prägefolie von der ersten Prägefolie abgezogen, die nicht mit ihr verbunden sind. Schließlich werden im Schritt d) die Teile der ersten Prägefolie und die Teile des Kunststoffilms und der Klebschicht des Substrats abgezogen, die außerhalb des Umfangs des Stempelmotivs (Stempelfläche) liegen.

In einer speziellen Form des obigen, modifizierten Verfahrens unter Verwendung von zwei Prägefolien kann man bei dem Prägevorgang im Schritt b) einen Stempel verwenden, dessen Stempelfläche neben dem flächenaussparenden, außenliegenden Konturmuster mit erhöhten Rändern gleichzeitig innenliegende, weniger erhöhte Konturlinien beinhaltet, sodaß erste und zweite Prägefolie im Bereich des Konturmusters und der Konturlinien über die Schmelzkleberschicht verbunden werden, die Trennschichten, Dekorschichten und Schmelzkleberschichten der Prägefolien und der Kunststoffilm und die Klebschicht des Substrats nur aber im Bereich der erhöhten Ränder des Konturmusters durchgeschmolzen und durchgestanzt werden.

In einer anderen Ausgestaltung des obigen, modifizierten Verfahrens bringt man in dem Schritt d) eine dritte Prägefolie aus Trägerschicht, Trennschicht, ein oder mehreren Dekorschichten und einer im Bereich von 110 bis 230°C aktivierbaren Schmelzkleberschicht auf die erste Prägefolie derart auf, daß die Schmelzkleberschicht der dritten Prägefolie der bzw. den Dekorschicht(en) der ersten Prägefolie gegenüberliegt, und prägt die dritte Prägefolie auf die Dekorschicht(en) der ersten Prägefolie bei einer Temperatur von 110 bis 230°C, einem Druck von 1,0 bis 7,0 bar und einer Zeitdauer von 3 bis 0,3 s mit einem zweiten Stempel, dessen Stempelfläche Konturlinien beinhaltet, die innerhalb des Konturmusters des ersten Stempels liegen, aber weniger erhöht als die Ränder des ersten Stempels sind, sodaß in dem Bereich der inneren Konturlinien (Stempelfläche) die erste und dritte Prägefolie miteinander verbunden werden, ohne daß aber die Trennschichten, Dekorschichten und Schmelzkleberschichten der Prägefolien und der Kunststoffilm und die Klebschicht des Substrats durchgeschmolzen und durchgestanzt werden, und zieht dann die Teile oder dritten Prägefolie ab, die nicht mit der ersten Prägefolie verbunden sind.

Bei den Prägevorgängen gemäß den obigen Verfahrensvarianten werden bevorzugt eine Temperatur von 150 bis 180°C, ein Druck von 2,0 bis 4,0 bar und eine Zeitdauer von 2 bis 0,5 s verwendet.

Das vollflächige Verbinden von Substrat und erster Prägefolie erfolgt bei den obigen Verfahrensvarianten vorzugsweise bei einer Temperatur von 150-180°C, einem Druck von 2,0 bis 4,0 bar und einer Zeitspanne von 0,6 bis 0,02 s.

Die in der zweiten bzw. dritten Prägefolie verwendete Trägerschicht und eingesetzten Dekorschichten können die im Zusammenhang mit der ersten Prägefolie genannten vorzugsweisen Ausgestaltungen besitzen.

Das erfindungsgemäße Verfahren ermöglicht die Herstellung umweltverträglicher und gesundheitsunbedenklicher Schmucketiketten. Dies wurde insbesondere dadurch ermöglicht, indem man ein Homo- bzw. Copolymer von Ethylen mit speziellen Schmelzfluß- und Schmelzpunkteigenschaften und spezifisch abgestimmte Prägeparameter miteinander kombiniert hat. Dadurch war es möglich, zu verhindern, daß sich entgegen bestehender Befürchtungen der Kunststoffilm beim Prägen verzieht, zwei- oder dreidimensionale Musterungen der Dekorschicht(en) verschwimmen und eine genaue Konturierung nicht mehr möglich ist.

Im folgenden wird ein Beispiel für die Durchführung des erfindungsgemäßen Verfahrens und ein über dieses Verfahren erhältliches Schmucketikett gegeben.

### BEISPIEL

Auf ein Substrat, bestehend aus einem superkalandrierten, silikonbeschichteten Trennpapier mit einem Flächengewicht von 84 g/m², einer auf Polyacrylaten basierenden Klebschicht mit einem Flächengewicht von 20 g/m² und einem Polyethylenfilm mit einer Dicke von 140 µm, einem Kristallit-Schmelzpunkt (DIN 53765) von 116°C, einer Schmelzwärme (DIN 53765) von 138 bis 146 J/g und einem Schmelzindex (DIN 53735) von 2,8 g/10 min, wobei die Oberfläche des Polyethylens durch eine Coronaentladung vorbehandelt worden ist, wurde eine Heißprägefolie der Firma Oeser/Göppingen (Warenbezeichnung: 95323860 sparkle grün) aufgebracht und mittels einer beheizten Druckwalze mit glatter Oberfläche bei einer Temperatur von 165°C, einem Druck von 3,0 bar und einer Zeitdauer von 0,05 s mit dem Substrat verbunden.

Im Anschluß daran wurde die Trägerfolie der obigen Heißprägefolie entfernt und es wurde eine zweite andersfarbige Heißprägefolie der Firma Kurz/Fürth (Warenbezeichnung: ALFM 18 931 silber) auf den verbliebenen Teil der ersten Prägefolie aufgetragen. Diese zweite Heißprägefolie wurde mittels eines Stempels, dessen Stempelfläche das äußere, flächenaussparende Konturmuster eines Pferdekopfes mit erhöhten Konturrändern und innenliegende, weniger erhöhte Konturlinien, z.B. in Form einer Pferdemahne, enthielt, mit der ersten Heißprägefolie unter Anwendung einer Prägetemperatur von 180 °C, eines Prägedrucks von 4,0 bar und einer Prägezeit von 1,0 s verbunden. Dabei wurden im Bereich der äußeren Konturränder gleichzeitig die Trennschichten, Dekorschichten und Schmelzkleberschichten beider Prägefolien, sowie Kunststoffilm und Klebschicht des Substrats durchgeschmolzen und durchgestanzt.

Anschließend wurde die Trägerschicht der zweiten Heißprägefolie entfernt, wobei auch die mit der ersten Heißprägefolie nicht verbundenen Teile der zweiten Heißprägefolie abgezogen wurden. Schließlich wurden noch außerhalb des Umfangs des Pferdekopfes die verbliebenen Teile der ersten Heißprägefolie, die Polyethylenfolie und die Klebschicht des Substrats entfernt.

## Patentansprüche

1. Verfahren zur Herstellung von Schmucketiketten, umfaßend die Schritte:
a) Aufbringen einer wärmeübertragbaren Prägefolie, die eine Trägerschicht, eine Trennschicht, ein oder mehrere Dekorschichten und eine Schmelzkleberschicht enthält, auf ein Substrat, umfassend ein Trennpapier, eine Klebschicht und einen Kunststoffilm, derart, daß die Schmelzkleberschicht der Prägefolie und der Kunststoffilm des Substrats gegenüberliegen;
b) Prägen der obigen Kombination aus Prägefolie und Substrat mit einem erhitzten Stempel, dessen Stempelfläche ein bestimmtes Motiv trägt und erhöhte Ränder gegenüber dem Inneren der Stempelfläche aufweist und auf die Trägerschicht der Prägefolie einwirkt, sodaß im Bereich der Stempelfläche Prägefolie und Substrat über die Schmelzkleberschicht miteinander verbunden werden, und Trennschicht, Dekorschicht(en) und Schmelzkleberschicht der Prägefolie, sowie Kunststoffilm und Klebschicht des Substrats im Bereich der erhöhten Ränder durchgeschmolzen und durchgestanzt werden;
c) Abziehen der Trägerschicht der Prägefolie und der Teile der Prägefolie von dem Substrat, die nicht mit diesem verbunden sind; und
d) Abziehen der Teile des Kunststoffilms und der Klebschicht des Substrats, die außerhalb des Umfangs des Stempelmotivs (Stempelfläche) liegen;
dadurch **gekennzeichnet**, daß man in dem Substrat als Kunststoffilm Homo- bzw. Copolymere von Ethylen mit einem Kristallit-Schmelzpunkt (DIN 53765) von 110 bis 120°C, einer Schmelzwärme (DIN 53765) von 125 bis 180 J/g und einem Schmelzindex (DIN 53735) von 2,0 bis 3,5 g/10 min verwendet, in der Prägefolie eine Schmelzkleberschicht wählt, die im Bereich von 110 bis 230°C wärmeaktivierbar ist, und den Prägevorgang bei einer Temperatur von 110 bis 230°C, einem Druck von 1,0 bis 7,0 bar und einer Zeitdauer von 3 bis 0,3 s durchführt.

2. Verfahren nach Anspruch 1, dadurch **gekennzeichnet**, daß der Kunststoffilm in dem Substrat aus Polyethylen niedriger Dichte (LDPE) besteht.

3. Verfahren nach Anspruch 1 oder 2, dadurch **gekennzeichnet**, daß die Oberfläche des Kunststoffilms in dem Substrat ein- oder beidseitig mit einer Haftvermittlungsschicht (Primer) versehen ist.

4. Verfahren nach Anspruch 1 oder 2, dadurch **gekennzeichnet**, daß die Oberfläche des Kunststoffilms in dein Substrat durch eine Corona- oder eine Plasmaentladung vorbehandelt ist.

5. Verfahren nach einem der vorhergehenden Ansprüche, dadurch **gekennzeichnet**, daß das Trennpapier in dem Substrat ein Silikonpapier ist.

6. Verfahren nach einem der vorhergehenden Ansprüche, dadurch **gekennzeichnet**, daß die Trägerschicht in der Prägefolie aus einem Polyesterfilm gebildet ist.

7. Verfahren nach einem der vorhergehenden Ansprüche, dadurch **gekennzeichnet**, daß die Dekorschicht(en) in der Prägefolie (eine) nicht-pigmentierte, transparente Lackschicht(en), (eine) pigmentierte Lackschicht(en) und/oder (eine) Metallschicht(en) umfaßt bzw. umfassen.

8. Verfahren nach Anspruch 7, dadurch **gekennzeichnet**, daß in der Prägefolie eine pigmentierte Lackschicht oder eine Metallschicht auf der der Schmelzkleberschicht gegenüberliegenden Seite und eine nicht-pigmentierte Lackschicht auf der der Trennschicht gegenüberliegenden Seite vorgesehen ist.

9. Verfahren nach einem der vorhergehenden Ansprüche, dadurch **gekennzeichnet**, daß man
im Schritt b) zunächst Prägefolie und Substrat über die Schmelzkleberschicht vollflächig bei einer Temperatur von 110 bis 200°C, einem Druck von 1,0 bis 5,5 bar und einer Zeitdauer von 1 bis 0,01 s verbindet, ehe man die Kombination aus Prägefolie und Substrat mit einem erhitzten Stempel prägt, dessen Stempelfläche ein bestimmtes Motiv trägt und erhöhte Ränder gegenüber dein Inneren der Stempelfläche aufweist und auf die Trägerschicht der Prägefolie einwirkt, sodaß im Bereich der Stempelfläche Trennschicht, Dekorschicht(en) und Schmelzkleberschicht der Prägefolie, sowie Kunststoffilm und Klebschicht des Substrats im Bereich der erhöhten Ränder durchgeschmolzen und durchgestanzt werden,
im Schritt c) die Trägerschicht der Prägefolie abzieht, und
im Schritt d) die Teile der Prägefolie, des Kunststoffilms und der Klebschicht des Substrats abzieht, die außerhalb des Umfangs des Stempelmotivs (Stempelfläche) liegen.

10. Verfahren nach Anspruch 9, dadurch **gekennzeichnet**, daß man
im Schritt b) nach dem vollflächigen Verbinden von Prägefolie und Substrat die Trägerschicht der aufgebrachten Prägefolie abzieht, und eine zweite Prägefolie mit unterschiedlichem Dekor aus Trägerschicht, Trennschicht, einer oder mehreren Dekorschicht(en) und einer bei 110 bis 230°C aktivierbaren Schmelzkleberschicht auf den auf dem Substrat verbliebenen Teil der ersten Prägefolie derart aufbringt, daß die Schmelzkleberschicht der zweiten Prägefolie der (den) Dekorschicht(en) der ersten Prägefolie gegenüberliegt, die zweite Prägefolie auf die Dekorschicht(en) der ersten Prägefolie mit einem Stempel, dessen Stempelfläche flächenaussparende, außenliegende Konturmuster mit erhöhten Rändern aufweist, bei einer Temperatur von 110 bis 230°C, einem Druck von 1,0 bis 7,0 bar und während einer Zeitspanne von 3 bis 0,3 s prägt, sodaß im näheren Bereich der Konturmuster der Stempelfläche erste und zweite Prägefolie über die Schmelzkleberschicht miteinander verbunden werden, und im Bereich der erhöhten Ränder die Trennschichten, Dekorschichten und Schmelzkleberschichten der Prägefolien, sowie Kunststoffilm und Klebschicht des Substrats durchgeschmolzen und durchgestanzt werden, anschließend
im Schritt c) die Trägerschicht der zweiten Prägefolie und die Teile der zweiten Prägefolie von der ersten Prägefolie abzieht, die nicht mit ihr verbunden sind, und schließlich
im Schritt d) die Teile der ersten Prägefolie und die Teile des Kunststoffilms und der Klebschicht des Substrats abzieht, die außerhalb des Umfangs des Konturmusters (Stempelfläche) liegen.

11. Verfahren nach Anspruch 10, dadurch **gekennzeichnet**, daß man im Schritt b) bei dem Prägevorgang einen Stempel verwendet, dessen Stempelfläche neben dem flächenaussparenden, außenliegenden Konturmuster mit erhöhten Rändern gleichzeitig innenliegende, weniger erhöhte Konturlinien beinhaltet, sodaß erste und zweite Prägefolie in dem Bereich des Konturmusters und der Konturlinien über die Schmelzkleberschicht verbunden werden, die Trennschichten, Dekorschichten und Schmelzkleberschichten der Prägefolien und der Kunststoffilm und die Klebschicht des Substrats nur aber im Bereich der erhöhten Ränder des Konturmusters durchgeschmolzen und durchgestanzt werden.

12. Verfahren nach Anspruch 10, dadurch **gekennzeichnet,** daß man in dem Schritt d) eine dritte Prägefolie aus Trennschicht, ein oder mehreren Dekorschichten und einer im Bereich vom 110 bis 230°C aktivierbaren Schmelzkleberschicht auf die erste Prägefolie derart aufbringt, daß die Schmelzkleberschicht der dritten Prägefolie der bzw. den Dekorschichten der ersten Prägefolie gegenüberliegt, und die dritte Prägefolie auf die Dekorschicht(en) der ersten Prägefolie bei einer Temperatur von 110 bis 230°C, einem Druck von 1,0 bis 7,0 bar und einer Zeitdauer von 3 bis 0,3 s mit einem zweiten Stempel prägt, dessen Stempelfläche Konturlinien beinhaltet, die innerhalb des Konturmusters des ersten Stempels liegen, aber weniger erhöht als die Ränder des ersten Stempels sind, sodaß in dem Bereich der inneren Konturlinien (Stempelfläche) die erste und dritte Prägefolie miteinander verbunden werden, ohne daß aber die Trennschichten, Dekorschichten und Schmelzkleberschichten der Prägefolien und der Kunststoffilm und die Klebschicht des Substrats durchgeschmolzen und durchgestanzt werden, und man dann die Teile der dritten Prägefolie abzieht, die nicht mit der ersten Prägefolie verbunden sind.

13. Verfahren nach einem der vorhergehenden Ansprüche, dadurch **gekennzeichnet**, daß man die Prägevorgänge bei einer Temperatur von 150 bis 180°C, einem Druck von 2,0 bis 4,0 bar und während einer Zeitdauer von 2 bis 0,5 s durchführt.

14. Verfahren nach einem der vorhergehenden Ansprüche 9 bis 13, dadurch **gekennzeichnet**, daß man das Substrat und die erste Prägefolie bei einer Temperatur von 150 bis 180°C, einem Druck von 2,0 bis 4,0 bar und während einer Zeitdauer von 0,6 bis 0,02 s vollflächig verbindet.

15. Schmucketiketten, erhältlich nach einem Verfahren gemäß einem der Ansprüche 1 bis 14.

## Claims

1. Method for the production of ornamental labels, including the steps:
a) applying a heat-transferable embossing foil which contains a support layer, a release layer, one or more decorative layers and a hot melt adhesive layer, to a substrate including a release paper, an adhesive layer and a plastic film, in such a way that the hot melt adhesive layer of the embossing foil and the plastic film of the substrate are opposite;
b) embossing the above combination of embossing foil and substrate with a heated stamp whose stamp surface bears a given motif and comprises raised edges relative to the interior of the stamp surface and acts on the support layer of the embossing foil, so that in the region of the stamp surface the embossing foil and substrate are joined together by the hot melt adhesive layer, and the release layer, decorative layer(s) and hot melt adhesive layer of the embossing foil as well as the plastic film and adhesive layer of the substrate are melted through and punched through in the region of the raised edges;
c) pulling the support layer of the embossing foil and the portions of the embossing foil which are not joined to the substrate, off the substrate; and
d) pulling off the portions of the plastic film and adhesive layer of the substrate which are located outside the periphery of the stamp motif (stamp surface);
characterised in that homopolymers or copolymers of ethylene with a crystallite melting point (DIN 53765) of 110 to 120°C, a fusion heat (DIN 53765) of 125 to 180 J/g and a melt-flow index (DIN 53735) of 2.0 to 3.5 g/10 min are used in the substrate as the plastic film, a hot melt adhesive layer which can be heat-activated in the range from 110 to 230°C is selected in the embossing foil, and the embossing process is carried out at a temperature of 110 to 230°C and pressure of 1.0 to 7.0 bar and for a time of 3 to 0.3 s.

2. Method according to claim 1, characterised in that the plastic film in the substrate is made of low-density polyethylene (LDPE).

3. Method according to claim 1 or 2, characterised in that the surface of the plastic film in the substrate is provided on one or both sides with a bonding agent (primer).

4. Method according to claim 1 or 2, characterised in that the surface of the plastic film in the substrate is pretreated by a corona or plasma discharge.

5. Method according to any of the preceding claims, characterised in that the release paper in the substrate is a silicone paper.

6. Method according to any of the preceding claims, characterised in that the support layer in the embossing foil is formed from a polyester film.

7. Method according to any of the preceding claims, characterised in that the decorative layer(s) in the embossing foil include(s) (an) unpigmented transparent lacquer layer(s), (a) pigmented lacquer layer(s) and/or (a) metal layer(s).

8. Method according to claim 7, characterised in that in the embossing foil is provided a pigmented lacquer layer or a metal layer on the side opposite the hot melt adhesive layer and an unpigmented lacquer layer on the side opposite the release layer.

9. Method according to any of the preceding claims, characterised in that in step b) first embossing foil and substrate are joined by the hot melt adhesive layer over the whole surface area at a temperature of 110 to 200°C and pressure of 1.0 to 5.5 bar and for a time of 1 to 0.01 s, before embossing the combination of embossing foil and substrate with a heated stamp whose stamp surface bears a given motif and comprises raised edges relative to the interior of the stamp surface and acts on the support layer of the embossing foil, so that in the region of the stamp surface the release layer, decorative layer(s) and hot melt adhesive layer of the embossing foil as well as the plastic film and adhesive layer of the substrate are melted through and punched through in the region of the raised edges,
in step c) the support layer of the embossing foil is pulled off, and
in step d) the portions of the embossing foil, the plastic film and the adhesive layer of the substrate which are located outside the periphery of the stamp motif (stamp surface) are pulled off.

10. Method according to claim 9, characterised in that in step b) after joining embossing foil and substrate over the whole surface area the support layer of the applied embossing foil is pulled off, and a second embossing foil with different decoration consisting of support layer, release layer, one or more decorative layer(s) and a hot melt adhesive layer which can be activated at 110 to 230°C is applied to the portion of the first embossing foil remaining on the substrate in such a way that the hot melt adhesive layer of the second embossing foil is opposite the decorative layer(s) of the first embossing foil, the second embossing foil is embossed onto the decorative layer(s) of the first embossing foil with a stamp whose stamp surface comprises surface-etching external contour patterns with raised edges, at a temperature of 110 to 230°C and pressure of 1.0 to 7.0 bar and for a time of 3 to 0.3 s, so that in the closer region of the contour patterns of the stamp surface the first and second embossing foils are joined together by the hot melt adhesive layer, and in the region of the raised edges the release layers, decorative layers and hot melt adhesive layers of the embossing foils as well as the plastic film and adhesive layer of the substrate are melted through and punched through, then
in step c) the support layer of the second embossing foil and the portions of the second embossing foil which are not joined to the first embossing foil are pulled off it, and finally
in step d) the portions of the first embossing foil and the portions of the plastic film and adhesive layer of the substrate which are located outside the periphery of the contour pattern (stamp surface) are pulled off.

11. Method according to claim 10, characterised in that in step b) in the embossing process there is used a stamp whose stamp surface in addition to the surface-etching external contour pattern with raised edges simultaneously contains internal less raised contour lines, so that first and second embossing foils are joined by the hot melt adhesive layer in the region of the contour pattern and contour lines, but the release layers, decorative layers and hot melt adhesive layers of the embossing foils and the plastic film and adhesive layer of the substrate are melted through and punched through only in the region of the raised edges of the contour pattern.

12. Method according to claim 10, characterised in that in step d) a third embossing foil consisting of release layer, one or more decorative layers and a hot melt adhesive layer which can be activated in the range from 110 to 230°C is applied to the first embossing foil in such a way that the hot melt adhesive layer of the third embossing foil is opposite the decorative layer(s) of the first embossing foil, and the third embossing foil is embossed onto the decorative layer(s) of the first embossing foil at a temperature of 110 to 230°C and pressure of 1.0 to 7.0 bar and for a time of 3 to 0.3 s with a second stamp whose stamp surface contains contour lines which are located within the contour pattern of the first stamp, but less raised than the edges of the first stamp, so that in the region of the inner contour lines (stamp surface) the first and third embossing foils are joined together but without the release layers, decorative layers and hot melt adhesive layers of the embossing foils and the plastic film and adhesive layer of the substrate being melted through and punched through, and then the portions of the third embossing foil which are not joined to the first embossing foil are pulled off.

13. Method according to any of the preceding claims, characterised in that the stamping processes are carried out at a temperature of 150 to 180°C and pressure of 2.0 to 4.0 bar and for a time of 2 to 0.5 s.

14. Method according to any of the preceding claims 9 to 13, characterised in that the substrate and the first embossing foil are joined over the whole surface area at a temperature of 150 to 180°C and pressure of 2.0 to 4.0 bar and for a time of 0.6 to 0.02 s.

15. Ornamental labels, obtainable by a method according to any of claims 1 to 14.

## Revendications

1. Procédé de fabrication d'étiquettes décoratives, comprenant les étapes suivantes:
a) application d'une feuille d'estampage à transfert thermique renfermant une couche de support, une couche de séparation, une ou plusieurs couches décoratives et une couche de colle fusible, sur un substrat comprenant un papier de séparation, une couche adhésive et un film de matière plastique, de façon telle que la couche de colle fusible de la feuille d'estampage et le film de matière plastique du substrat soient en regard l'un de l'autre;
b) estampage de l'ensemble combiné précédent constitué de la feuille d'estampage et du substrat à l'aide d'un poinçon chauffé, dont la surface de poinçon porte un motif déterminé et présente des bords surélevés par rapport à l'intérieur de la surface de poinçon et agit sur la couche de support de la feuille d'estampage, de façon à ce que dans la zone de la surface de poinçon la feuille d'estampage et le substrat soient reliés l'un à l'autre par l'intermédiaire de la couche de colle fusible, et que la couche de séparation, la ou les couches(e) décorative(s) et la couche de colle fusible de la feuille d'estampage, ainsi que le film de matière plastique et la couche adhésive du substrat soient découpés par fusion dans la zone des bords surélevés;
c) retrait de la couche de support de la feuille d'estampage et des parties de la feuille d'estampage, du substrat, qui ne sont pas reliées à celui-ci; et
d) retrait des parties du film de matière plastique et de la couche adhésive du substrat, qui sont situées à l'extérieur de la périphérie du motif du poinçon (surface de poinçon);
**caractérisé** en ce que l'on utilise dans le substrat, en guise de film de matière plastique des homopolymères ou des copolymères de l'éthylène avec un point de fusion de cristallinité (DIN 53765) de 110 à 120°C, une chaleur de fusion (DIN 53765) de 125 à 180 J/g, et un index de fusion (DIN 53735) de 2,0 à 3,5 g/10 min, que l'on sélectionne dans la feuille d'estampage, une couche de colle fusible pouvant être thermoactivée dans une plage de 110 à 230°C, et que l'on effectue l'opération d'estampage à une température de 110 à 230°C, une pression de 1,0 à 7,0 bar et pendant une durée de 3 à 0,3 s.

2. Procédé selon la revendication 1, **caractérisé** en ce que le film de matière plastique dans le substrat, est réalisé en polyéthylène basse densité (LDPE).

3. Procédé selon la revendication 1 ou 2, **caractérisé** en ce que la surface du film de matière plastique dans le substrat, est pourvue sur un ou les deux côtés, d'une couche d'accrochage (couche de fond)

4. Procédé selon la revendication 1 ou 2, **caractérisé** en ce que la surface du film de matière plastique dans le substrat est pré-traitée par une décharge au plasma ou un traitement corona.

5. Procédé selon l'une des revendications précédentes, **caractérisé** en ce que le papier de séparation dans le substrat est un papier au silicone.

6. Procédé selon l'une des revendications précédentes, **caractérisé** en ce que la couche de support dans la feuille d'estampage, est formée par un film de polyester.

7. Procédé selon l'une des revendications précédentes, **caractérisé** en ce que la ou les couche(s) décorative(s) dans la feuille d'estampage comporte(nt) une ou des couche(s) de vernis transparente(s) non pigmentée(s), une ou des couche(s) de vernis pigmentée(s) et/ou une ou des couche(s) de métal.

8. Procédé selon la revendication 7, **caractérisé** en ce que dans la feuille d'estampage on prévoit une couche de vernis pigmentée ou une couche de métal sur le côté opposé à la couche de colle fusible, et une couche de vernis non pigmentée sur le côté opposé à la couche de séparation.

9. Procédé selon l'une des revendications précédentes, **caractérisé** en ce que
dans l'étape b) on relie tout d'abord la feuille d'estampage et le substrat sur toute la surface, par l'intermédiaire de la couche de colle fusible, à une température de 110 à 200 °C, une pression de 1,0 à 5,5 bar et pendant une durée de 1 à 0,01 s, avant d'estamper l'ensemble combiné formé de la feuille d'estampage et du substrat à l'aide d'un poinçon chauffé, dont la surface de poinçon porte un motif déterminé et présente des bords surélevés par rapport à l'intérieur de la surface de poinçon et agit sur la couche de support de la feuille d'estampage, de façon à ce que dans la zone de la surface de poinçon la couche de séparation, la ou les couches(e) décorative(s) et la couche de colle fusible de la feuille d'estampage, ainsi que le film de matière plastique et la couche adhésive du substrat soient découpés par fusion dans la zone des bords surélevés,
dans l'étape c) on retire la couche de support de la feuille d'estampage, et
dans l'étape d) on retire les parties de la feuille d'estampage, du film de matière plastique et de la couche adhésive du substrat, qui sont situées en-dehors de la périphérie du motif du poinçon (surface de poinçon).

10. Procédé selon la revendication 9, **caractérisé** en ce que
dans l'étape b), après avoir relié sur toute la surface la feuille d'estampage et le substrat, on retire la couche de support de la feuille d'estampage appliquée, et on applique sur la partie de la première feuille d'estampage restée sur le substrat, une seconde feuille d'estampage de décor différent et constituée d'une couche de support, d'une couche de séparation, d'une ou plusieurs couche(s) décorative(s) et d'une couche de colle fusible pouvant être thermoactivée de 110 à 230°C, de façon telle que la couche de colle fusible de la seconde feuille d'estampage soit en regard de la ou des couche(s) décorative(s) de la première feuille d'estampage, que l'on applique par estampage la seconde feuille d'estampage sur la ou les couche(s) décorative(s) de la première feuille d'estampage au moyen d'un poinçon d'estampage, dont la surface de poinçon présente des motifs de contour extérieur évidant des surfaces, avec des bords surélevés, à une température de 110 à 230°C, une pression de 1,0 à 7,0 bar et durant un intervalle de temps de 3 à 0,3 s, de façon à ce que dans la zone voisine des motifs de contour de la surface de poinçon, la première et la seconde feuille d'estampage soient reliées l'une à l'autre par l'intermédiaire de la couche de colle fusible, et que dans la zone des bords surélevés, les couches de séparation, les couches décoratives et les couches de colle fusible des feuilles d'estampage, ainsi que le film de matière plastique et la couche adhésive du substrat soient découpés par fusion,
dans l'étape c) on retire ensuite la couche de support de la seconde feuille d'estampage et les parties de la seconde feuille d'estampage de la première feuille d'estampage, qui ne sont pas reliées à celle-ci, et finalement
dans l'étape d) on retire les parties de la première feuille d'estampage et les parties du film de matière plastique et de la couche adhésive du substrat, qui sont situées à l'extérieur de la périphérie du motif de contour (surface de poinçon).

11. Procédé selon la revendication 10, **caractérisé** en ce que dans l'étape b) on utilise lors de l'opération d'estampage, un poinçon dont la surface de poinçon comporte simultanément, en-dehors du motif de contour situé à l'extérieur, évidant des surfaces et présentant des bords surélevés, des lignes de contours situées à l'intérieur et moins élevées, de façon à ce que la première et la seconde feuille soient reliées dans la zone du motif de contour et des lignes de contour par l'intermédiaire de la couche de colle fusible, mais que les couches de séparation, les couches décoratives et les couches de colle fusible des feuilles d'estampage, et le film de matière plastique et la couche adhésive du substrat, soient découpés par fusion uniquement dans la zone des bords surélevés du motif de contour.

12. Procédé selon la revendication 10, **caractérisé** en ce que dans l'étape d) on applique sur la première feuille d'estampage, une troisième feuille d'estampage constituée d'une couche de séparation, d'une ou de plusieurs couches décoratives, et d'une couche fusible pouvant être thermoactivée dans une plage de 110 à 230°C, de façon telle que la couche de colle fusible de la troisième feuille d'estampage soit en regard de ou des couches décoratives de la première feuille d'estampage, et que l'on applique par estampage la troisième feuille d'estampage sur la ou les couche(s) décorative(s) de la première feuille d'estampage, à une température de 110 à 230°C, une pression de 1,0 à 7,0 bar et pendant une durée de 3 à 0,3 s, à l'aide d'un poinçon dont la surface de poinçon contient des lignes de contour situées à l'intérieur du motif de contour du premier poinçon, mais sont moins surélevées que les bords du premier poinçon, de façon à ce que la première feuille d'estampage et la troisième feuille d'estampage soient reliées l'une à l'autre dans la zone des lignes de contour intérieures (surface de poinçon), mais sans que les couches de séparation, les couches décoratives et les couches de colle fusible des feuilles d'estampage et le film de matière plastique et la couche adhésive du substrat soient découpées par fusion, et l'on retire ensuite les parties de la troisième feuille d'estampage, qui ne sont pas reliées à la première feuille d'estampage.

13. Procédé selon l'une des revendications précédentes, **caractérisé** en ce que l'on effectue les opérations d'estampage à une température de 150 à 180°C, à une pression de 2,0 à 4,0 bar, et pendant une durée de 2 à 0,5 s.

14. Procédé selon l'une des revendications 9 à 13 précédentes, **caractérisé** en ce que l'on relie le substrat et la première feuille d'estampage sur toute la surface, à une température de 150 à 180°C, une pression de 2,0 à 4,0 bar et pendant une durée de 0,6 à 0,02 s.

15. Etiquettes décoratives pouvant être obtenues par l'un des procédés selon l'une des revendications 1 à 14.
